# EUROPEAN PATENT SPECIFICATION

(11) **EP 2 711 895 B1**
(45) Date of publication and mention of the grant of the patent: **28.03.2018**
(21) Application number: 13182383.3
(22) Date of filing: 30.08.2013
(51) Int. Cl.: G06T 7/00, B60R 1/06

(54) **Calibration method and apparatus for in-vehicle camera**
Kalibrierverfahren und Vorrichtung für Fahrzeugbordkamera
Procédé et appareil d'étalonnage de caméra embarquée

(30) Priority: 24.09.2012 JP 2012209076
(43) Date of publication of application: 26.03.2014
(73) Proprietor: Clarion Co., Ltd., Saitama 330-0081 (JP)
(72) Inventor: Sakano, Morihiko, Tokyo 100-8280 (JP); Sato, Keiji, Saitama 330-0081 (JP); Takada, Yusuke, Saitama 330-0081 (JP); Okada, Tsukasa, Saitama 330-0081 (JP)
(74) Representative: MERH-IP Matias Erny Reichl Hoffmann Patentanwälte PartG mbB

(56) References cited:
- EP-A1- 2 375 376
- EP-A1- 2 590 408
- EP-A1- 2 597 614
- EP-A2- 1 968 011
- US-A1- 2011 285 856

## Description

### BACKGROUND OF THE INVENTION

The present invention relates to a calibration method and an apparatus for a camera.

Today, an image of the area behind a vehicle is shot by an in-vehicle camera for display it on an in-vehicle monitor. This display allows the driver to visually recognize the state of the area, which is immediately behind the vehicle in the blind spot area, as an image displayed the in-vehicle monitor, thereby increasing visibility when backing the vehicle.

Before displaying an image, shot by such an in-vehicle camera, on the in-vehicle monitor, a calibration index is placed behind the vehicle for calibrating the mounting state of the in-vehicle camera on the vehicle. The driver can view the image of the calibration index, displayed on the in-vehicle monitor, to adjust the mounting state of the in-vehicle camera so that the image of the calibration index is properly displayed.

In addition, predetermined operation processing based on the image of the calibration index is performed for an image, captured by the in-vehicle camera, to properly calibrate the image displayed on the in-vehicle monitor.

Another method is performed as follows. The whole peripheral area of a vehicle is shot by a plurality of in-vehicle cameras, each of the plurality of images obtained by the in-vehicle cameras is converted to an image (bird's-eye view image) viewed directly from above the vehicle, and the images are mapped by adjusting the positions among the images to produce a single viewpoint-converted composite image (WO00/07373 (corresponding to U.S. patent No. 7307655)).

Such a method requires accurate positioning between the neighboring two images and, therefore, requires high-accuracy calibration.

However, the conventional calibration methods require that the relative positional relation between a calibration index and a vehicle be strictly defined. This means that, after the vehicle is set, the calibration index must be set accurately with respect to the vehicle or that, after the calibration index is set, the vehicle must be set accurately with respect to the calibration index.

To meet this need, the facility of a vehicle production line is rebuilt at a high cost in order to increase the positional accuracy between a vehicle and a calibration index. In addition, when calibration is performed again in the maintenance division of a sales/service company after a vehicle is once shipped from the production site (the vehicle is repaired or an in-vehicle camera is added later), the calibration index must be set accurately each time calibration is performed. This calibration takes more time and labor.

To address this problem, there is a need for a calibration method that does not require relative positioning accuracy between a vehicle and a calibration index.

A calibration method that does not require relative positioning accuracy between a vehicle and a calibration index is disclosed in JP-A-2012-015576 (corresponding to U.S. Patent Publication No. 2013/100290). JP-A-2012-015576 uses the characteristics not related to the stopped state of a vehicle, such as the linearity, parallelism, orthogonality, and interval of a white-line grid, to calibrate the internal/distortion parameters and external parameters of a plurality of cameras.

This method can calibrate the internal/distortion parameters with no need for vehicle positioning, allowing simple, high-accuracy calibration.

A method and an apparatus for camera calibration are known from EP 1 968 011 A2 that realize calibration processing needed to project camera-shot images onto a predetermined surface and merge them together.

### SUMMARY OF THE INVENTION

However, a white-line grid for calibration, which is drawn or laid down directly on the flat surface below a vehicle, requires a large calibration chart when the vehicle is large, for example, when the vehicle is a large construction machine. Preparing such a large calibration chart (e.g., creating, carrying, and laying down a large calibration chart) for calibration requires time and labor.

In view of the foregoing, it is an object of the present invention to eliminate the need for achieving relative positioning accuracy between a vehicle and a calibration index and to simplify the preparation for laying down a calibration index.

According to an aspect of the invention a camera calibration method is described in connection with claim 1. According to another aspect of the invention a camera calibration apparatus is described in connection with claim 7. Further preferred embodiments are described in connection with the respective dependent claims.

The present invention eliminates the need for achieving relative positioning accuracy between a vehicle and a calibration index and simplifies the preparation for laying down a calibration index.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing an example of a configuration of a camera calibration apparatus in the present invention.
FIG. 2 is a diagram showing an example of a calibration target in the present invention.
FIG. 3 is a diagram showing the positioning state of a vehicle with respect to the calibration target in the present invention.
FIG. 4 is a diagram showing an example of the flowchart of the calibration apparatus in the present invention.
FIG. 5 is a diagram showing an example of the flowchart of a recognition determination unit in the present invention.
FIG. 6 is a diagram showing an example of the flowchart of a calibration unit in the present invention.

### DETAILED DESCRIPTION OF THE EMBODIMENT

An example of a calibration apparatus according to the present invention is described below.

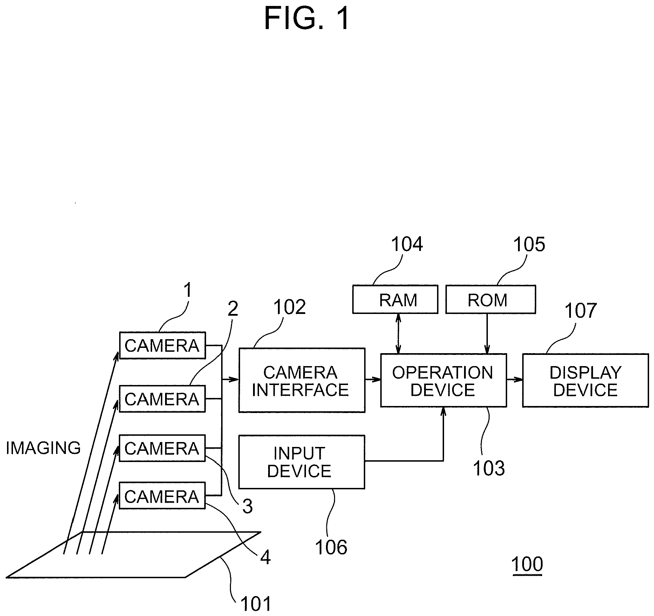

FIG. 1 is a diagram showing an example of a calibration apparatus in this embodiment.

A calibration apparatus 100 images the vehicle's peripheral area, which includes a calibration index provided in advance on the surface of the road where a vehicle is positioned, with the use of a plurality of cameras mounted on the vehicle and, using the plurality of imaged images, calibrates the cameras. This calibration apparatus 100 includes a calibration target 101, a camera 1, a camera 2, a camera 3, and a camera 4 all of which are an imaging unit, a camera interface 102, an operation device 103, a RAM 104 that is a storage unit, a ROM 105 that is a storage unit, an input device 106, and a display device 107.

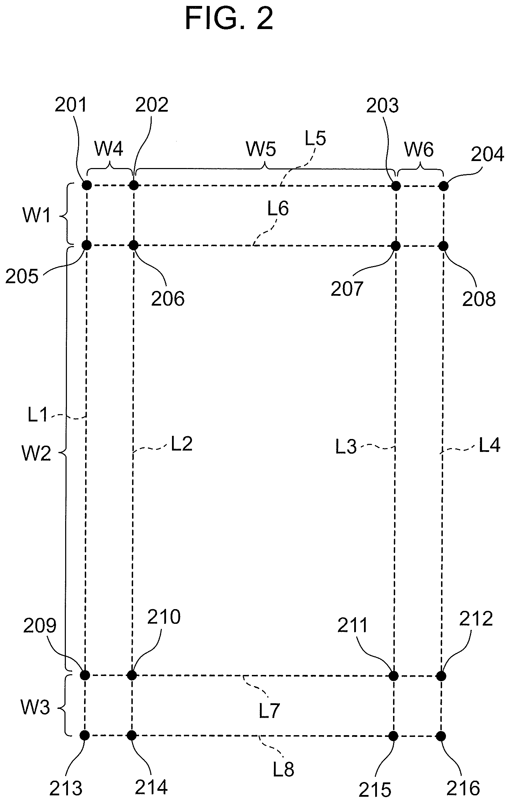

The calibration target 101, which is a calibration index, includes information required for the calibration performed in the present invention. The calibration target 101 is shot by the camera 1, camera 2, camera 3, and camera 4 for use in calibration. The information required for calibration is given in the description of FIG. 2 that will be shown later.

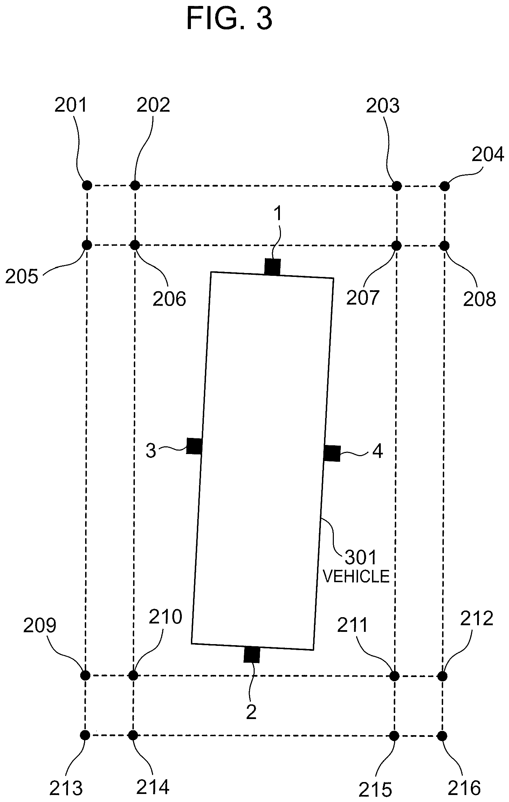

The camera 1, camera 2, camera 3, and camera 4 are mounted on the front, rear, left, and right sides of the vehicle as shown in FIG. 3. At calibration time, the camera 1, camera 2, camera 3, and camera 4 shoot the calibration target 101 to generate videos to be used in the calibration. After the calibration, the operation device 103 performs viewpoint conversion and composition for the videos generated by the camera 1, camera 2, camera 3, and camera 4 and, via the display device 107, presents a bird's-eye view, which is a video viewed directly from above the vehicle, to the user.

The camera interface 102 correctly samples the video signals, sent from the camera 1, camera 2, camera 3, and camera 4 that are an imaging unit, and sends the video signals, which are sampled from the cameras, to the operation device 103.

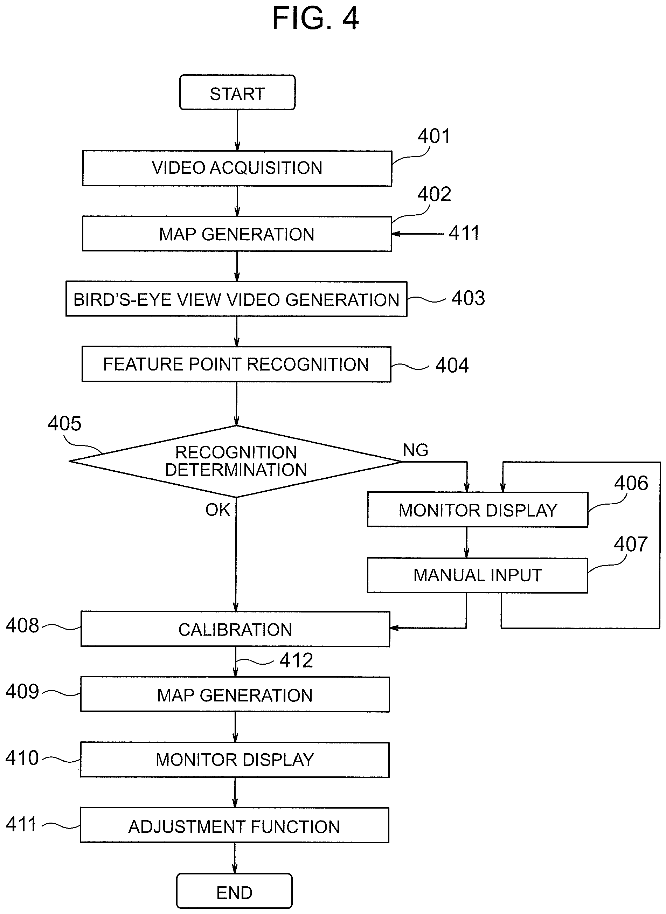

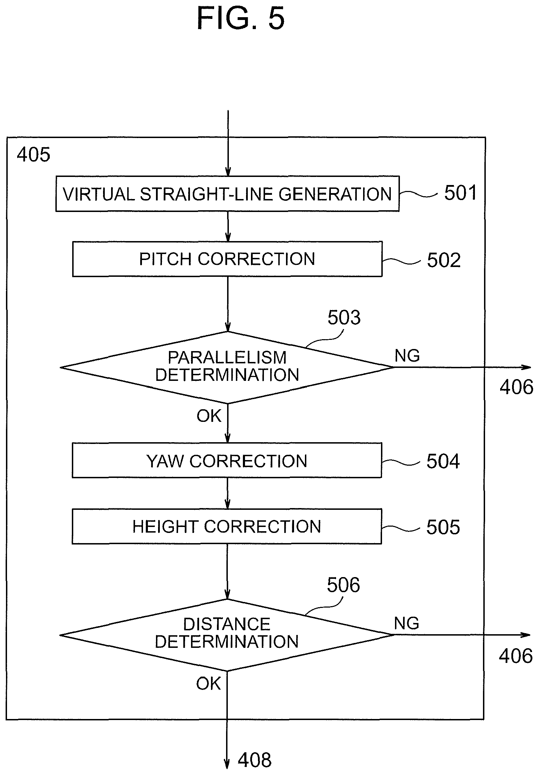

The operation device 103 works with the camera interface 102, RAM 104, ROM 105, input device 106, and display device 107 to perform various types of operations including the calibration operation. More specifically, the operation device 103 acquires the video signal, sent from the camera interface 102, stores the acquired signal in the RAM 104, reads a camera parameter initial value 411, which is a first camera parameter stored in the ROM 105, to perform viewpoint conversion and composition for the video signal stored in the RAM 104, and displays the viewpoint-converted, composite video image on the display device 107. In addition, to make the bird's-eye-view video a video viewed directly from above, the operation device 103 performs the calibration operation for calculating the camera mounting positions or the camera poses and receives user input information, accepted by the input device 106, for use in calibration operation. The detailed procedure is described with reference to FIG. 4 and FIG. 5 that are shown later.

In the RAM 104, the video signals shot by the camera 1, camera 2, camera 3, and camera 4 and acquired from the camera interface 102 are stored. The calculation results calculated by the operation device 103 are also stored in the RAM 104.

In the ROM 105, the prior information required by the calibration apparatus 100 is written and stored. For example, the camera parameters, such as the design values of camera mounting positions or poses, focal distances of the cameras, pixel size, optic axis center, and distortion function, are stored.

The input device 106 accepts an input, such as information required for calibration, from the user and sends the input information to the operation device 103.

The display device 107 converts the video signals of the camera 1, camera 2, camera 3, and camera 4 based on an instruction from the operation device 103 and displays the converted signals. Depending upon the instruction from the operation device 103, the display device 107 displays the video of only the camera 2 in the unconverted format or viewpoint-converts and composes the video signals of the camera 1, camera 2, camera 3, and camera 4 and displays the image in a bird's-eye view.

FIG. 2 is a diagram showing an example of the calibration target 101 that is a calibration index used in this embodiment.

The calibration target 101 is composed of 16 feature points, feature point 201 to feature point 216. The feature point 201 to feature point 216 are set on one flat surface. The feature point 201 to feature point 216 are the intersections of parallel straight lines.

The calibration target 101, which is a calibration index, is composed of a plurality of intersections (feature point 201, feature point 202, feature point 205, and feature point 206 or feature point 209, feature point 210, feature point 213, and feature point 214) where at least two first parallel straight lines (L1, L2) and two second parallel straight lines (L5, L6 or L7, L8), which are perpendicular to the two parallel straight lines, intersect. As shown in FIG. 2, the calibration target 101, which is a calibration index, may be composed of a plurality of intersections (feature point 201 to feature point 216) where four parallel straight lines (first parallel straight lines: L1, L2, third parallel straight lines: L3, L4) and four parallel straight lines (second parallel straight lines: L5, L6, fourth parallel straight lines: L7, L8), which are perpendicular to the four parallel straight lines, intersect. In addition, the calibration target 101 may be composed of a plurality of intersections (feature point 201 to feature point 208, feature point 209, feature point 210, feature point 213, and feature point 214 or feature point 201 to feature point 208, feature point 211, feature point 212, feature point 215, and feature point 216) where four parallel straight lines (first parallel straight lines: L1, L2, third parallel straight lines: L3, L4) and two parallel straight lines (second parallel straight lines: L5, L6 or fourth parallel straight lines: L7, L8), which are perpendicular to the four parallel straight lines, intersect.

For example, straight line L1 that joins the feature point 201 and the feature point 213 is parallel to straight line L2 that joins the feature point 202 and the feature point 214, and the straight line L3 that joins the feature point 203 and the feature point 215 is parallel to straight line L4 that joins the feature point 204 and the feature point 216. Similarly, straight line L5 that joins the feature point 201 and the feature point 204 is parallel to the straight line L6 that joins the feature point 205 and the feature point 208, and straight line L7 that joins the feature point 209 and the feature point 212 is parallel to straight line L8 that joins the feature point 213 and the feature point 216.

In addition, the feature point 205 and the feature point 209 are present on straight line L1 that joins the feature point 201 and the feature point 213, the feature point 206 and the feature point 210 are present on straight line L2 that joins the feature point 202 and the feature point 214, the feature point 207 and the feature point 211 are present on straight line L3 that joins the feature point 203 and the feature point 215, and the feature point 208 and the feature point 212 are present on straight line L4 that joins the feature point 204 and the feature point 216.

In addition, the feature point 202 and the feature point 203 are present on straight line L5 that joins the feature point 201 and the feature point 204, the feature point 206 and the feature point 207 are present on straight line L6 that joins the feature point 205 and the feature point 208, the feature point 210 and the feature point 211 are present on straight line L7 that joins the feature point 209 and the feature point 212, and the feature point 214 and the feature point 215 are present on the straight line L8 that joins the feature point 213 and the feature point 216.

The distance between the feature point 201 and the feature point 205 is a predetermined value W1, the distance between the feature point 205 and the feature point 209 is a predetermined value W2, and the distance between the feature point 209 and the feature point 213 is a predetermined value W3.

The distance between the feature point 201 and the feature point 202 is a predetermined value W4, the distance between the feature point 202 and the feature point 203 is a predetermined value W5, and the distance between the feature point 203 and the feature point 204 is a predetermined value W6.

The "information required for calibration" described in the first part of description of FIG. 1 refers to the flatness of the feature points given above, the parallelism of lines L1 to L4 and L5 to L8 created by the feature points, the linearity indicated, for example, by the feature point 201, feature point 205, feature point 209, and feature point 213 that are present on L1, and the distances W1 to W6 between each two features points. Straight lines L1 to L8 need not be actually drawn on the calibration target 101.

The calibration target 101 described above is exemplary only and not intended to be limiting. For example, as long as parallelism and linearity are satisfied, the number of feature points may be increased.

Orthogonality between straight line L5 that joins the feature point 201 and the feature point 204 and straight line L1 that joins the feature point 201 and the feature point 213 is not always required. For example, each of the straight lines L1 and L2 may be inclined by 5 degree with respect to a line orthogonal to each of the straight lines L5 and L6, and also each of the straight lines L3 and L4 may be inclined by 10 degree with respect to the line orthogonal to each of the straight lines L5 and L6 In other words, the parallel straight lines L1 and L2 may have differnet inclination other than 90 degree from the parallel straight lines L5 and L6, and also the parallel straight lines L3 and L4 may have differnet inclination other than 90 degree from the parallel straight lines L5 and L6. Although the calibration can be performed under this condition, in order to perform the calibration accurately, it is preferable to set the straight lines L1, L2, L3 and L4 in parallel to each other and set the straight lines L5, L6, L7 and L8 in parallel to each other. In this case, the parallel straight lines L1, L2, L3 and L4 may be shifted from 90 degree with respect to the parallel straight lines L5, L6, L7 and L8

A feature point may have any shape. It is desirable that intersection coordinates can be read as accurately as possible.

FIG. 3 is a diagram showing the positioning state of a vehicle 301 with respect to the calibration target 101. The camera 1 is mounted on the front side of the vehicle 301, the camera 2 on the rear side, the camera 3 on the left side, and the camera 4 on the right side. The vehicle 301 is stopped inside the calibration target 101. Although the ideal stop position of the vehicle 301 is a position where the center of the vehicle coincides with the center of the calibration target 101, it is also possible that the vehicle 301 is parked obliquely as shown in FIG. 3 or that the stop position of the vehicle 301 is shifted forward, backward, right, or left.

The feature point 201, feature point 202, feature point 203, feature point 204, feature point 205, feature point 206, feature point 207, and feature point 208 must be included in the shooting range of the camera 1.

The feature point 209, feature point 210, feature point 211, feature point 212, feature point 213, feature point 214, feature point 215, and feature point 216 must be included in the shooting range of the camera 2.

The feature point 201, feature point 202, feature point 205, feature point 206, feature point 209, feature point 210, feature point 213, and feature point 214 must be included in the shooting range of the camera 3.

The feature point 203, feature point 204, feature point 207, feature point 208, feature point 211, feature point 212, feature point 215, and feature point 216 must be included in the shooting range of the camera 4.

FIG. 4 shows an example of the flowchart of the operation device 103 of the calibration apparatus 100.

The processing is described below.

Video acquisition processing 401 acquires the video signals, generated by shooting the calibration target 101 by the camera 1, camera 2, camera 3, and camera 4, from the camera interface 102. The video signals are saved in the RAM 104 via the operation device 103.

Map generation processing 402 reads the camera parameter initial value 411 from the ROM 105 that is a storage unit. Based on the camera parameter initial value 411, the map generation processing 402 generates a map that converts the video signals of the camera 1, camera 2, camera 3, and camera 4, saved in the RAM 104 that is a storage unit, to a bird's-eye view video. For example, for the camera 1, the map includes a collection of information identifying that the pixel corresponding to a pixel in the bird's-eye view video is one specific pixel of the video shot by the camera 1. The map is used when the video signals of the camera 1, camera 2, camera 3, and camera 4 are viewpoint-converted and composed. The correspondence between a pixel in the bird's-eye view and a pixel in the video of each camera can be easily obtained by the camera geometric transformation expression if the initial pose of the camera and the pose of the viewpoint of the bird's-eye view are known.

Bird's-eye view video generation processing 403 uses the map, generated by the map generation processing 402, and the video signals, shot by the camera 1, camera 2, camera 3, and camera 4 and stored in the RAM 104, to generate the bird's-eye view video by viewpoint-converting the video signals of each camera. At this time, the bird's-eye view video generation processing 403 does not compose the camera images. The four bird's-eye-view videos, each corresponding to those generated by converting each of the video signals of the camera 1, camera 2, camera 3, and camera 4 to the bird's-eye-view video, are stored again in the RAM 104.

The bird's-eye-view video generated in this processing is not a video viewed from directly above. This is because the camera position is slightly deviated when mounted or its pose is incorrect and, therefore, the state of the actually mounted camera is different from that specified by the camera parameter initial value 411. The bird's-eye-view video is a video viewed directly above only when the camera is mounted exactly as specified by the camera parameter initial value 411. However, a small deviation generated when the camera was mounted results in a deviation in the bird's-eye-view. Therefore, calibration for correcting the camera position and pose is required.

Feature point recognition processing 404 recognizes the feature points included in the four bird's-eye-view videos of the camera 1, camera 2, camera 3, and camera 4 saved in the RAM 104.

The bird's-eye-view video of the camera 1 includes eight feature points: feature point 201, feature point 202, feature point 203, feature point 204, feature point 205, feature point 206, feature point 207, and feature point 208.

The bird's-eye-view video of the camera 2 includes eight feature points: feature point 209, feature point 210, feature point 211, feature point 212, feature point 213, feature point 214, feature point 215, and feature point 216.

The bird's-eye-view video of the camera 3 includes eight feature points: feature point 201, feature point 202, feature point 205, feature point 206, feature point 209, feature point 210, feature point 213, and feature point 214.

The bird's-eye-view video of the camera 4 includes eight feature points: feature point 203, feature point 204, feature point 207, feature point 208, feature point 211, feature point 212, feature point 215, and feature point 216.

The feature point recognition processing 404 automatically recognizes the feature points, shot by each camera, through image recognition and acquires the coordinates of each feature point in the image. To acquire the coordinates, the existing image recognition methods, such as template matching or hough transform, are used.

Recognition determination processing 405 determines whether the feature points recognized by the feature point recognition processing 404 are correct. The determination method is given in the description of FIG. 5.

If the recognition determination processing 405 determines that the feature points are incorrect (NG), that is, if the recognition determination processing 405 determines that the recognized feature points are wrong, the processing proceeds to the feature point input mode in which the user enters feature points. First, monitor display processing 406 displays the bird's-eye-view video of the camera 1, saved in the RAM 104, on the display device 107. The user manually enters the coordinates of the feature points, included in the image shot by the camera 1, from the input device 106 while referencing the monitor video. For example, the user uses the monitor of a PC as the display device 107, and the mouse cursor as the input device 106, during this processing. The user enters pairs of points, each composed of two points, as the feature points: two points at the ends of straight line L5, two points at the ends of straight line L6, two points on straight line L1, two points on straight line L2, two points on straight line L3, and two points on straight line L4 (manual input processing 407).

The user performs the above processing for the camera 2, camera 3, and camera 4.

For the camera 2, the user enters pairs of points, each composed of two points, as the feature points: two points at the ends of straight line L7, two points at the ends of straight line L8, two points on straight line L1, two points on straight line L2, two points on straight line L3, and two points on straight line L4.

For the camera 3, the user enters pairs of points, each composed of two points, as the feature points: two points at the ends of straight line L1, two points at the ends of straight line L2, two points on straight line L5, two points on straight line L6, two points on straight line L7, and two points on straight line L8.

For the camera 4, the user enters pairs of points, each composed of two points, as the feature points: two points at the ends of straight line L3, two points at the ends of straight line L4, two points on straight line L1, two points on straight line L2, two points on straight line L3, and two points on straight line L4.

Using the feature point coordinates entered as described above, calibration processing 408 is performed.

If the recognition determination processing 405 determines that the feature points are correct (OK), that is, the recognition determination processing 405 determines that the recognized feature points are correct, the calibration processing 408 is performed using the recognized feature points.

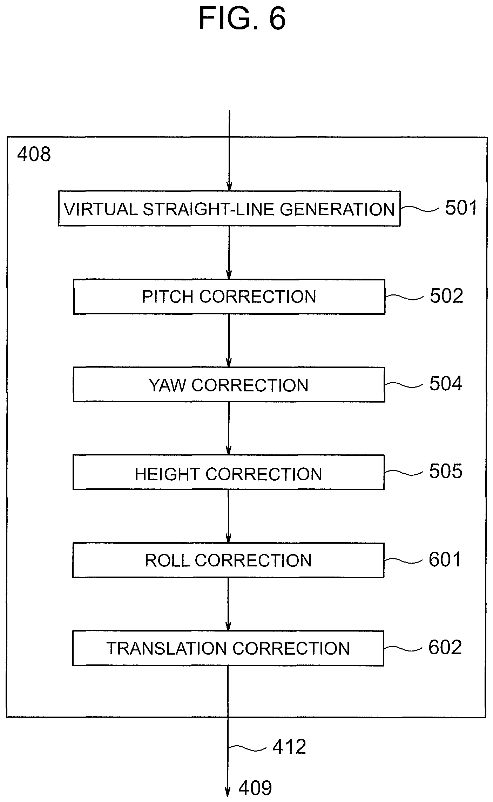

The calibration processing 408 corrects an error in the position and the pose of each of the cameras (camera 1, camera 2, camera 3, and camera 4) based on their design values so that a non-deviated, ideal bird's-eye-view video is obtained. The position refers to the three-dimensional space coordinates (x, y, z), and the pose refers to rolling, pitching, and yawing. The detailed processing is described in the flowchart in FIG. 6 in which the calibration processing 408 is described. The calibration processing 408 produces a calibrated parameter 412 (second camera parameter) for the position and the pose that include an error from the design value of each camera.

The processing of map generation processing 409 is the same as that of the map generation processing 402. The map contains the correspondence between each pixel in the videos of the camera 1, camera 2, camera 3, and camera 4 and a pixel in the converted bird's-eye-view camera videos. A composite image is generated by generating a bird's-eye-view video according to this correspondence. The viewpoint conversion is performed by the bird's-eye view video generation processing 403, but the composition is performed for the first time by this processing. The map generation processing 402 does not compose the videos of the camera 1, camera 2, camera 3, and camera 4 but only converts each video to a bird's-eye view. The map generation processing 409 uses the calibrated parameter 412 when generating the map and therefore correctly knows the poses of the camera 1, camera 2, camera 3, and camera 4. Because the map is generated based on the pixel correspondence calculated from the correct poses, performing bird's-eye-view conversion based on this map produces a non-deviated, correct bird's-eye-view video.

Monitor display processing 410 generates a bird's-eye view video using the map, which was generated by the map generation processing 409 and for which an error in the mounting position and the pose is taken into consideration, and outputs the generated bird's-eye-view video to the monitor. The bird's-eye-view video that is output is displayed on the display device 107.

The adjustment function processing 411 is a function that allows the user to adjust the display video while viewing the result of the monitor display processing 410. For example, the adjustment function processing 411 causes the monitor to display the bird's-eye-view video as well as a slide bar for use in adjusting. The displayed slide bar corresponds to the camera parameter. The user can move the slide bar to the right and left via the input device 106 to change the camera parameter. Changing the parameter switches the display of the bird's-eye-view video according to the value of the parameter. This function gives the user the ability to adjust the camera parameter while viewing the video. Even when the calibration accuracy is insufficient with a slight deviation still observed, this adjustment function enables the user to output a non-deviated, correct bird's-eye-view video. Although it is difficult for the user to make such an adjustment for a large deviation, this adjustment function allows the user, with little or no experience and knowledge, to simply correct a video that is already correctly adjusted but has a slight deviation. There is no need to use this function if the bird's-eye-view video is not deviated and the calibration accuracy is determined to be sufficient.

The user can display a non-deviated, correct bird's-eye-view video by performing the processing from the video acquisition processing 401 to the monitor display processing 410.

FIG. 5 is a flowchart showing the detail of the recognition determination processing 405.

The recognition determination processing 405 determines whether the feature points recognized by the feature point recognition processing 404 are correct. The recognition determination processing 405 performs determination by partly performing calibration.

Virtual straight-line generation processing 501 generates straight lines each of which joins the feature points that form a pair. The virtual straight-line generation processing 501 performs calibration by making adjustments so that the straight lines satisfy parallelism or the distances become constant.

Pitch correction processing 502 calibrates the pitch angles of the cameras. This processing calculates the pitch angles of the camera 1, camera 2, camera 3, and camera 4 so that the parallel straight lines in the calibration target 101 (that is, straight lines L1, L2, L3, and L4 and straight lines L5, L6, L7, and L8) become parallel. A camera, which is not calibrated, has a mounting error and a pose error. This makes the lines, normally displayed as parallel straight lines, appear, not as parallel, but as non-parallel. The pitch correction processing 502 calculates the pitch angles of the cameras that make the non-parallel straight lines appear as parallel. For the camera 1 and camera 2, the pitch correction processing 502 calculates the pitch angles that satisfy the parallelism of straight lines L1, L2, L3, and L4 and, for the camera 3 and camera 4, the pitch angles that satisfy the parallelism of straight lines L5, L6, L7, and L8.

The pitch correction processing 502 performs the calculation, for example, for the camera 1 and camera 2 as follows. An error function is designed that produces the minimum value when the angle between the lines of each of all pairs, formed by straight lines L1, L2, L3, and L4, is 0 degree and produces a larger value as the angle deviates from 0 degree. By repetitively changing the pitch angles of the cameras using the optimization technique so that the error function produces the minimum value, the pitch angles that make L1, L2, L3, and L4 parallel, that is, the ideal pitch angles that change the videos to the bird's-eye view videos, can be obtained. Conversely, finding the ideal pitch angles that change the videos to bird's-eye-view videos means that the camera pitch angles that include an error can be obtained (that is, the current camera mounting state can be identified). For the camera 3 and the camera 4, the pitch correction processing 502 performs the similar processing for straight lines L5, L6, L7, and L8.

Parallelism determination processing 503 determines if the virtual straight lines in the bird's-eye-view video, produced by the conversion based on the pitch angles obtained by the pitch correction processing 502, satisfy the parallelism requirements. For the camera 1 and the camera 2, the parallelism determination processing 503 performs parallelism determination for the maximum angle between the two lines of one of all pairs formed by straight lines L1, L2, L3, and L4. If the maximum angle is equal to or higher than a predetermined value (for example, 1 degree) defined by the designer according to the environment, the parallelism determination processing 503 determines that the straight lines do not satisfy the required parallelism (NG), that is, the feature points are not recognized correctly. If the maximum angle is lower than the predetermined value, the parallelism determination processing 503 determines that the lines satisfy the required parallelism (OK). The pitch angles obtained by the pitch correction processing 502 the pitch angles via which bird's-eye view conversion can be performed to make the straight lines as parallel as possible. If the angles do not achieve the parallelism, it is considered that the feature points are not recognized correctly. If the parallelism is not satisfied (NG), the processing proceeds to the monitor display processing 406 and the manual input processing 407. That is, the user is requested to enter the feature points. If the parallelism is satisfied (OK), another determination is performed.

Yaw correction processing 504 calibrates the yaw angles of the cameras. In the recognition determination processing 405, this yaw correction processing 504 is considered as the preprocessing of height correction processing 505 that is described later. Correcting the pitch angle and the yaw angle can create a bird's-eye-view video that is viewed from directly above, making it possible to perform the height correction processing 505 describe below. The concept of calibration performed by this processing is exactly the same as that of calibration performed by the pitch correction processing 502. The yaw angle is calculated using the optimization technique so that the straight lines become parallel. Note that the straight lines referenced by the yaw correction processing 504 are different from those referenced by the pitch correction processing 502. That is, the pitch angle corresponds to the angle of the movement of a camera in the vertical direction, while the yaw angle corresponds to the angle of the movement of a camera in the horizontal direction.

Therefore, the yaw correction processing 504 adjusts the angles of cameras so that the straight lines corresponding to the horizontal direction become parallel. The yaw correction processing 504 calculates the yaw angle that makes straight lines L5 and L6 parallel for the camera 1, the yaw angle that makes straight lines L7 and L8 parallel for the camera 2, the yaw angle that makes straight lines L1 and L2 parallel for the camera 3, and the yaw angle that makes straight lines L3 and L4 parallel for the camera 4. Because only two straight lines are seen from a camera in this embodiment, the yaw angle can be obtained that makes the lines parallel even if there is an error in the feature point coordinates. Therefore, it is impossible to determine whether the two lines are parallel (cannot determine whether OK or NG). However, when the number of straight lines in the calibration target 101 is different from that used in this embodiment, the determination can be performed (OK or NG) as in the pitch correction processing.

The height correction processing 505 calibrates the camera heights. The camera height calibration finds a camera height at which the distance between each two straight lines is equal to the defined distance (that is, the distance between the two lines in the calibration target 101). The camera 1 shoots straight lines L1, L2, L3, L4, L5, and L6. The distance between straight lines L1 and L2 is W4, the distance between straight lines L2 and L3 is W5, the distance between straight lines L3 and L4 is W6, and the distance between straight lines L5 and L6 is W1. These distances in the bird's-eye-view videos can be easily calculated through geometric calculation. The height correction processing 505 calculates the camera height that makes each of these distances equal to the distance between the virtual straight lines formed by the feature points.

The calculation method is similar to that used by the pitch correction processing 502. That is, an error function is designed that produces the minimum value when the distance between the virtual straight lines becomes a predetermined distance and, using the optimization technique, the camera height is repetitively changed so that the error function produces the minimum value. The camera height corresponding to the minimum error, obtained by this processing, represents the camera height (current mounting state) that includes an error. For the camera 2, camera 3, and camera 4, the height correction processing 505 performs the similar processing for the virtual straight lines formed by the feature points that are shot.

Distance determination processing 506 determines the distance between the virtual lines when a bird's-eye-view video is generated using the camera height calculated by the height correction processing 505. If the deviation in the distance between the virtual lines is equal to or larger than a predetermined value defined by the designer according to the environment, the distance determination processing 506 determines that the distance is incorrect (NG), that is, the feature points are not recognized correctly. If the deviation is smaller than the predetermined value, the distance determination processing 506 determines that the feature points are recognized correctly. The camera height obtained by the height correction processing 505 is the height with which a bird's-eye-view video is created in which the distance between the virtual lines becomes near to the predetermined distance as much as possible. If the feature points are recognized correctly, the camera height that satisfies the distances between each two of all straight lines should be found. Conversely, if the distance is deviated from the predetermined value, it is considered that the feature points cannot be recognized correctly.

If the distance determination processing 506 determines that the distance is incorrect (NG), the processing proceeds to the monitor display processing 406 and the manual input processing 407 to allow the user to enter the feature points. If the distance determination processing 506 determines that the distance is correct (OK), the processing proceeds to the calibration processing 408.

FIG. 6 is a flowchart showing the detail of the calibration processing 408.

The calibration processing 408 includes the virtual line generation processing 501, pitch correction processing 502, yaw correction processing 504, height correction processing 505, roll correction processing 601, and translation correction processing 602. The calibration processing 408 sequentially obtains the three camera pose parameters and the camera position parameters, corresponding to the three-dimensional space coordinates, by means of the pitch correction processing 502 (pitch angle), yaw correction processing 504 (yaw angle), height correction processing 505 (camera height), roll correction processing 601 (roll angle), and translation correction processing 602 (roll angle).

The pitch correction processing 502 and the yaw correction processing 504 output the pitch angles and the yaw angles for generating a bird's-eye-view video viewed from directly above, the height correction processing 505 outputs the camera heights for generating a bird's-eye-view video in which the distance between the straight lines is equal to that in the calibration target 101, the roll correction processing 601 outputs the roll angles considering the vehicle's angle-parking components and the camera roll angles, and the translation correction processing 602 outputs the camera translation positions.

Because the virtual straight-line generation processing 501, pitch correction processing 502, yaw correction processing 504, and height correction processing 505 are the same as those given in the description of the recognition determination processing 405 in FIG. 5, the description is omitted.

The roll correction processing 601 calibrates the roll angles of the cameras. To calibrate the roll angles, the roll correction processing 601 once sets the slopes of the vertical straight lines L1, L2, L3, and L4, shot by the camera 1, camera 2, camera 3, and camera 4, to the same direction and, after that, changes the roll angles of the camera 1, camera 2, camera 3, and camera 4 by the same amount. While performing this processing, the roll correction processing 601 finds the roll angles that minimize an error in straight lines L1, L2, L3, and L4 in the boundary parts of the cameras in the bird's-eye-view video. The roll correction processing 601 once sets the slopes of the straight lines to the same direction and then changes the roll angles by the same amount, because true roll angle is found in the solutions where the slopes of the straight lines are the same and because there is a need to limit the solution candidates. The roll angles, which minimize an error in the boundary parts, are solutions for the following reason.

First, the positional error of a camera may be considered small (about 1 cm or lower) and, in that case, the positional deviation in the camera bird's-eye-view video is small. Note that other errors (pitch angle, yaw angle, height) have already been corrected. Therefore, if the positional deviation is small, the roll angles corresponding to actual pose errors may be obtained by making corrections so that the bird's-eye-view videos are smoothly composed into one video. The calculation method is the same as that for other corrections. That is, an object function is designed to find the angles that minimize its value. The object function is designed so that it produces the minimum when the deviation error in the straight lines in the boundary part is small. Unlike the pitch correction processing 502, yaw correction processing 504, and height correction processing 505, the roll correction processing 601 performs this processing using the information, not on one camera, but on the camera 1, camera 2, camera 3, and camera 4.

The translation correction processing 602 calibrates the translation component of each camera. The translation correction processing 602 performs calibration for the components corresponding to x and y of three-dimensional coordinates x, y, and z where z is the height. In the calibration of the camera translation component, the translation correction processing 602 finds a translation component that minimizes the deviation in the straight lines in the bird's-eye-view video. The translation correction processing 602 differs from the roll correction processing 601 in the parameter that is changed; the roll correction processing 601 changes the roll angle while the translation correction processing 602 changes the translation component.

That is, the translation correction processing 602 shifts the video vertically and horizontally to minimize the deviation. The roll correction processing 601, which performs adjustment using only the roll angles, cannot remove an error in the translation component. On the other hand, the translation correction processing 602 can remove this error to generate a non-deviated bird's-eye-view video. The calculation method for a translation component is the same as that for other corrections. That is, an error function is designed that finds a translation component that minimizes the value of the error function. The error function is designed so that the function produces the minimum value when the deviation error in the straight lines in the boundary part is small. The optimum technique is used to find a translation component that minimizes the error. This translation component is the one corresponding to the deviation amount in the actual camera mounting.

The parameters obtained as described above generate a bird's-eye view that includes an error from the design value and has no deviation from the camera mounting/pose.

In this embodiment, four cameras are used. That is, the four cameras can be corrected if there are feature points, from feature point 201 to feature point 216. However, to correct four cameras, at least the feature points 201-208, feature point 209, feature point 210, feature point 213, and feature point 214 are required or the feature points 201-208, feature point 211, feature point 212, feature point 215, and feature point 216 are required. The present invention is applicable also to the configuration in which there are at least two or three cameras. For example, the camera 1 and the camera 3 can be corrected if there are the feature point 201, feature point 202, feature point 205, and feature point 206, the camera 1 and the camera 4 can be corrected if there are the feature point 203, feature point 204, feature point 207, and feature point 208, and the camera 1, camera 3, and the camera 4 can be corrected if there are feature points 201-208.

The calibration method described above does not require the relative positioning accuracy between a vehicle and a calibration index and simplifies the preparation for setting a calibration index. The invention is defined by the appended claims

## Claims

1. A computer implemented camera calibration method for calibrating a plurality of cameras (1, 2, 3, 4) using a plurality of images generated by imaging a peripheral area of a vehicle by the plurality of cameras (1, 2, 3, 4), the peripheral area of a vehicle including a calibration index pre-set on a road surface where the vehicle is positioned, the plurality of cameras (1, 2, 3, 4) mounted on the vehicle,
said calibration index including a plurality of intersections (201, 202, 205, 206 or 209, 210, 213, 214) formed by at least two first parallel straight lines (L1, L2) and two second parallel straight lines (L5, L6 or L7, L8) having different inclination from the two first parallel straight lines (L1, L2), said camera calibration method comprising the steps of:
generating (403) a bird's-eye-view video by viewpoint-converting each of the plurality of images based on a first set of camera parameters that is stored in advance;
recognizing (404) the plurality of intersections from the generated bird's-eye-view video; and
calculating (408) a second set of camera parameters, via which a non-deviated bird's-eye-view video can be generated, based on the plurality of recognized intersections and information on positions and poses of said plurality of cameras (1, 2, 3, 4),
**characterized in that**
the step of calculating (408) a second set of camera parameters comprises the steps of:
generating (501) a plurality of straight lines from the plurality of recognized intersections;
calculating (502, 504) pitch angles and yaw angles of the plurality of cameras so that the plurality of generated straight lines in the images generated by the cameras become parallel;
calculating (505) heights of the plurality of cameras so that a distance between each two of the plurality of straight lines in the images generated by the cameras becomes a pre-defined distance;
calibrating (601) roll angles of the plurality of cameras by setting the slopes of the vertical straight lines shot by each camera to the same direction, and changing the roll angles of each camera by the same amount so that an error in the boundary parts of the images forming the bird's-eye-view video is minimized;
calculating (602) translation components so that the deviation error in the straight lines in the boundary of the images forming the bird's-eye-view video is minimized; and
calculating (408) the second set of camera parameters, via which a non-deviated bird's-eye-view video can be generated, based on the calculated pitch angles, yaw angles, heights, roll angles, and translation components, all of which are the information on positions and poses of the plurality of cameras, and the plurality of recognized intersections.

2. The camera calibration method according to claim 1, wherein the step of calculating (408) a second set of camera parameters comprises the steps of:
determining (405) whether the plurality of recognized intersections are correct;
outputting (406) the bird's-eye-view video on a display device (107) if it is determined that the plurality of intersections are wrong as a result of the determination; and
when a plurality of correct intersections are entered (407), calculating (408) a second set of camera parameters, via which a non-deviated bird's-eye-view video can be generated, based on the plurality of entered intersections and pre-stored information on positions and poses of the plurality of cameras.

3. The camera calibration method according to claim 1 or 2, wherein
the bird's-eye-view video is generated using a map generated based on the first set of camera parameters.

4. The camera calibration method according to at least one of claims 1 to 3, further comprising the step of:
determining (405) whether the plurality of recognized intersections from the generated bird's-eye-view video are correct based on the calculated pitch angles, yaw angles, and heights.

5. The camera calibration method according to at least one of claims 1 to 4, wherein
said calibration index includes a plurality of intersections (201-208, 209, 210, 213, 214 or 201-208, 211, 212, 215, 216) formed by at least two first parallel straight lines (L1, L2), two second parallel straight lines (L5, L6 or L7, L8) having different inclination from the two first parallel straight lines (L1, L2), and two third parallel straight lines (L3, L4) having different inclination from the two first parallel straight lines (L1, L2).

6. The camera calibration method according to at least one of claims 1 to 4, wherein
said calibration index includes a plurality of intersections (201-216) formed by two first parallel straight lines (L1, L2), two second-parallel straight lines (L5, L6) having different inclination from the two first parallel straight lines (L1, L2), two third parallel straight lines (L3, L4) having different inclination from the two first parallel straight lines (L1, L2), and two fourth parallel straight lines (L7, L8) having different inclination from the second and third parallel straight lines (L3, L4, L5, L6).

7. A camera calibration apparatus for calibrating a plurality of cameras (1, 2, 3, 4) using a plurality of images generated by imaging a peripheral area of a vehicle by the plurality of cameras (1, 2, 3, 4), the peripheral area of a vehicle including a calibration index pre-set on a road surface where the vehicle is positioned, the plurality of cameras (1, 2, 3, 4) mounted on the vehicle,
said calibration index including a plurality of intersections (201, 202, 205, 206 or 209, 210, 213, 214) formed by at least two first parallel straight lines (L1, L2) and two second parallel straight lines (L5, L6 or L7, L8) having different inclination from the two first parallel straight lines (L1, L2), said camera calibration apparatus comprising:
a bird's-eye-view video generation unit (403) that generates a bird's-eye-view video by viewpoint-converting each of the plurality of images based on a first set of camera parameters that is stored in advance;
a feature point recognition unit (404) that recognizes the plurality of intersections from the generated bird's-eye-view video; and
a calibration unit (408) that calculates a second set of camera parameters, via which a non-deviated bird's-eye-view video can be generated, based on the plurality of recognized intersections and information on positions and poses of said plurality of cameras (1, 2, 3, 4),
**characterized in that**
said calibration unit (408) comprises:
a virtual straight line generation unit (501) that generates a plurality of straight lines from the plurality of recognized intersections;
a pitch correction unit (502) that calculate pitch angles of the plurality of cameras so that the plurality of generated straight lines in the images generated by the cameras become parallel;
a yaw correction unit (504) that calculate yaw angles of the plurality of cameras so that the plurality of generated straight lines in the images generated by the cameras become parallel;
a height correction unit (505) that calculates heights of the plurality of cameras so that a distance between each two of the plurality of straight lines in the images generated by the cameras becomes a pre-defined distance;
a roll correction unit (601) that calibrates roll angles of the plurality of cameras by setting the slopes of the vertical straight lines shot by each camera to the same direction, and changing the roll angles of each camera by the same amount so that an error in the boundary parts of the images forming the bird's-eye-view video is minimized; and
a translation correction unit (602) that calculates translation components so that the deviation error in the straight lines in the boundary of the images forming the bird's-eye-view video is minimized, wherein
said calibration unit (408) calculates a second set of camera parameters, via which a non-deviated bird's-eye-view video can be generated, based on the calculated pitch angles, yaw angles, heights, roll angles, and translation components, all of which are the information on positions and poses of the plurality of cameras, and the plurality of recognized intersections..

8. The camera calibration apparatus according to claim 7, further comprising:
a recognition determination unit (405) that determines whether the plurality of recognized intersections are correct;
a display unit (406) that displays the bird's-eye-view video on a display device (107) if it is determined that the plurality of intersections are wrong as a result of the determination; and
an input unit (407) via which a plurality of correct intersections are entered, wherein
said calibration unit (408) calculates a second set of camera parameters, via which a non-deviated bird's-eye-view video can be generated, based on the plurality of intersections entered from said input unit (407) and pre-stored information on positions and poses of the plurality of cameras.

9. The camera calibration apparatus according to claim 7 or 8, further comprising:
a map generation unit (411) that generates a map for converting the plurality of images to the bird's-eye-view video based on the first set of camera parameters.

10. The camera calibration apparatus according to claim 8, wherein
said recognition determination unit (405) determines whether the plurality of recognized intersections are correct based on the calculated pitch angles, yaw angles, and heights.

11. The camera calibration apparatus according to at least one of claims 7 to 10, wherein
said calibration index includes a plurality of intersections (201-208, 209, 210, 213, 214 or 201-208, 211, 212, 215, 216) formed by at least two first parallel straight lines (L1, L2), two second parallel straight lines (L5, L6 or L7,L8) having different inclination from the two first parallel straight lines (L1, L2), and two third parallel straight lines (L3, L4) having different inclination from the two first parallel straight lines (L1, L2).

12. The camera calibration apparatus according to at least one of claims 7 to 10, wherein
said calibration index includes a plurality of intersections (201-216) formed by two first parallel straight lines (L1, L2), two second parallel straight lines (L5, L6) having different inclination from the two first parallel straight lines (L1, L2), two third parallel straight lines (L3, L4) having different inclination from the two first parallel straight lines (L1, L2), and two fourth parallel straight lines (L7, L8) having different inclination from the second and third parallel straight lines (L3, L4, L5, L6).

## Patentansprüche

1. Computerimplementiertes Kamerakalibrierungsverfahren zum Kalibrieren mehrerer Kameras (1, 2, 3, 4) unter Verwendung mehrerer Bilder, die durch Abbilden eines Umfangsbereichs eines Fahrzeugs durch die mehreren Kameras (1, 2, 3, 4) erzeugt werden, wobei der Umfangsbereich eines Fahrzeugs einen Kalibrierungsindex enthält, der auf eine Straßenfläche, wo das Fahrzeug positioniert ist, voreingestellt ist, wobei die mehreren Kameras (1, 2, 3, 4) an dem Fahrzeug angebracht sind,
wobei der Kalibrierungsindex mehrere Kreuzungen (201, 202, 205, 206 oder 209, 210, 213, 214) enthält, die durch mindestens zwei erste parallele gerade Linien (L1, L2) und zwei zweite parallele gerade Linien (L5, L6 oder L7, L8) mit von den beiden ersten parallelen geraden Linien (L1, L2) verschiedener Neigung gebildet werden, wobei das Kamerakalibrierungsverfahren die Schritte umfasst:
Erzeugen (403) eines Vogelperspektivenvideos durch Umsetzen des Sichtpunkts jedes der mehreren Bilder anhand einer ersten Gruppe von Kameraparametern, die im Voraus gespeichert sind;
Erkennen (404) der mehreren Kreuzungen aus dem erzeugten Vogelperspektivenvideo; und
Berechnen (408) einer zweiten Gruppe von Kameraparametern, über die ein nicht abgewichenes Vogelperspektivenvideo anhand der mehreren erkannten Kreuzungen und von Informationen über Positionen und Stellungen der mehreren Kameras (1, 2, 3, 4) erzeugt werden kann,
**dadurch gekennzeichnet, dass**
der Schritt des Berechnens (408) einer zweiten Gruppe von Kameraparametern die Schritte umfasst:
Erzeugen (501) mehrerer gerader Linien aus den mehreren erkannten Kreuzungen;
Berechnen (502, 504) von Steigungswinkeln und Scherwinkeln der mehreren Kameras, so dass die mehreren erzeugten geraden Linien in den durch die Kameras erzeugten Bildern parallel werden;
Berechnen (505) von Höhen der mehreren Kameras, so dass ein Abstand zwischen jeweils zwelen der mehreren geraden Linien in den durch die Kameras erzeugten Bildern einen im Voraus definierten Abstand annimmt;
Kalibrieren (601) von Rollwinkeln der mehreren Kameras durch Einstellen der Steigungen der vertikalen geraden Linien, die durch jede Kamera aufgenommen werden, in dieselbe Richtung und Ändern der Rollwinkel jeder Kamera um denselben Betrag, so dass ein Fehler in den Randteilen der Bilder, die das Vogelperspektivenvideo bilden, minimiert wird;
Berechnen (602) von Translationskomponenten, so dass der Abwelchungsfehler in den geraden Linien in dem Rand der Bilder, die das Vogelperspektivenvideo bilden, minimiert wird; und
Berechnen (408) der zweiten Gruppe von Kameraparametern, über die ein nicht abgewichenes Vogelperspektivenvideo anhand der berechneten Steigungswinkel, Scherwinkel, Höhen, Rollwinkel und Translationskomponenten, die alle die Informationen über Positionen und Stellungen der mehreren Kameras sind, und der mehreren erkannten Kreuzungen erzeugt werden kann.

2. Kamerakalibrierungsverfahren nach Anspruch 1, wobei der Schritt des Berechnens (408) einer zweiten Gruppe von Kameraparametern die folgenden Schritte umfasst:
Bestimmen (405), ob die mehreren erkannten Kreuzungen korrekt sind;
Ausgeben (406) des Vogelperspektivenvideos auf einer Anzeigevorrichtung (107), wenn bestimmt wird, dass die mehreren Kreuzungen falsch sind, als ein Ergebnis der Bestimmung; und
dann, wenn mehrere korrekte Kreuzungen eingegeben werden (407), Berechnen (408) einer zweiten Gruppe von Kameraparametern, über die ein nicht abgewichenes Vogelperspektivenvideo anhand der eingegebenen mehreren Kreuzungen und vorgespeicherten Informationen über Positionen und Stellungen der mehreren Kameras erzeugt werden kann.

3. Kamerakalibrierungsverfahren nach Anspruch 1 oder 2, wobei das Vogelperspektivenvideo unter Verwendung einer Karte anhand der ersten Gruppe von Kameraparametern erzeugt wird.

4. Kamerakalibrierungsverfahren nach mindestens einem der Ansprüche 1 bis 3, das ferner den Schritt umfasst;
Bestimmen (405), ob die mehreren erkannten Kreuzungen aus dem erzeugten Vogelperspektivenvideo korrekt sind, anhand der berechneten Steigungswinkel, Scherwinkel und Höhen.

5. Kamerakalibrierungsverfahren nach mindestens einem der Ansprüche 1 bis 4, wobei
der Kalibrierungsindex mehrere Kreuzungen (201-208, 209, 210, 213, 214 oder 201-208, 211, 212, 215, 216), die durch mindestens zwei erste parallele gerade Linien (L1, L2), zwei zweite parallele gerade Linien (L5, L6 oder L7, L8) mit von den beiden ersten parallelen geraden Linien (L1, L2) verschiedener Neigung und zwei dritten parallelen geraden Linien (L3, L4) mit von den beiden ersten parallelen geraden Linien (L1, L2) verschiedener Neigung gebildet werden.

6. Kamerakalibrierungsverfahren nach mindestens einem der Ansprüche 1 bis 4, wobei
der Kalibrierungsindex mehrere Kreuzungen (201-216) enthält, die durch zwei erste parallele gerade Linien (L1, L2), zwei zweite parallele gerade Linien (L5, L6) mit von den beiden ersten parallelen geraden Linien (L1, L2) verschiedener Neigung, zwei dritten parallelen geraden Linien (L3, L4) mit von den beiden ersten parallelen geraden Linien (L1, L2) verschiedener Neigung und zwei vierten parallelen geraden Linien (L7, L8) mit von den zweiten und den dritten parallelen geraden Linien (L3, L4, L5, L6) verschiedener Neigung gebildet werden.

7. Kamerakalibrierungsvorrichtung zum Kalibrieren mehrerer Kameras (1, 2, 3, 4) unter Verwendung von mehreren Bildern, die durch Abbilden eines Umfangsbereichs eines Fahrzeugs durch die mehreren Kameras (1, 2, 3, 4) erzeugt werden, wobei der Umfangsbereich eines Fahrzeugs einen Kalibrierungsindex enthält, der auf eine Straßenfläche, wo das Fahrzeug positioniert Ist, voreingestellt ist, wobei die mehreren Kameras (1, 2, 3, 4) an dem Fahrzeug angebracht sind,
wobei der Kalibrierungsindex mehrere Kreuzungen (201, 202, 205, 206 oder 209, 210, 213, 214) enthält, die durch mindestens zwei erste parallele gerade Linien (L1, L2) und zwei zweite parallele gerade Linien (L5, L6 oder L7, L8) mit von den beiden ersten parallelen geraden Linien (L1, L2) verschiedener Neigung gebildet werden, wobei die Kamerakalibrierungsvorrichtung umfasst:
eine Einheit zum Erzeugen eines Vogelperspektivenvideos (403), die ein Vogelperspektivenvideo durch Umsetzen des Sichtpunkts jedes der mehreren Bilder anhand einer ersten Gruppe von Kameraparametern, die im Voraus gespeichert sind, erzeugt;
eine Merkmalspunkterkennungseinheit (404), die die mehreren Kreuzungen aus dem erzeugten Vogelperspektivenvideo erkennt; und
eine Kalibrierungseinheit (408), die eine zweite Gruppe von Kameraparametern, über die ein nicht abgewichenes Vogelperspektivenvideo erzeugt werden kann, anhand der mehreren erkannten Kreuzungen und Informationen über Positionen und Stellungen der mehreren Kameras (1, 2, 3, 4) berechnet,
**dadurch gekennzeichnet, dass**
die Kalibrierungseinheit (408) umfasst:
eine Einheit zum Erzeugen virtueller gerader Linien (501), die mehrere gerade Linien aus den mehreren erkannten Kreuzungen erzeugt;
eine Steigungskorrektureinheit (502), die Steigungswinkel der mehreren Kameras berechnet, so dass die mehreren erzeugten geraden Linien in den durch die Kameras erzeugten Bildern parallel werden;
eine Scherkorrektureinheit (504), die Scherwinkel der mehreren Kameras berechnet, so dass die mehreren erzeugten geraden Linien in den durch die Kameras erzeugten Bildern parallel werden;
eine Höhenkorrektureinheit (505), die Höhen der mehreren Kameras berechnet, so dass ein Abstand zwischen jeweils zweien der mehreren geraden Linien in den durch die Kameras erzeugten Bildern einen im Voraus definierten Abstand annimmt;
eine Rollkorrektureinheit (601), die Rollwinkel der mehreren Kameras durch Einstellen der Steigungen der vertikalen geraden Linien, die durch jede Kamera aufgenommen werden, in dieselbe Richtung und Ändern der Rollwinkel jeder Kamera um denselben Betrag, so dass ein Fehler in den Randteilen der Bilder, die das Vogelperspektivenvideo bilden, minimiert wird, kalibriert;
eine Translationskorrektureinheit (602), die Translationskomponenten berechnet, so dass der Abweichungsfehler in den geraden Linien in dem Rand der Bilder, die das Vogelperspektivenvideo bilden, minimiert wird, wobei
die Kalibrierungseinheit (408) eine zweite Gruppe von Kameraparametern, über die ein nicht abgewichenes Vogelperspektivenvideo erzeugt werden kann, anhand der berechneten Steigungswinkel, Scherwinkel, Höhen, Rollwinkel und Translationskomponenten, die alle die Informationen über Positionen und Stellungen der mehreren Kameras sind, und der mehreren erkannten Kreuzungen, berechnet.

8. Kamerakalibrierungsvorrichtung nach Anspruch 7, die ferner umfasst:
eine Erkennungsbestimmungseinheit (405), die bestimmt, ob die mehreren erkannten Kreuzungen korrekt sind;
eine Anzeigeeinheit (406), die das Vogelperspektivenvideo auf einer Anzeigevorrichtung (107) als ein Ergebnis der Bestimmung anzeigt, wenn bestimmt wird, dass die mehreren Kreuzungen falsch sind; und
eine Eingabeeinheit (407), über die mehrere korrekte Kreuzungen eingegeben werden, wobei
die Kalibrierungseinheit (408) eine zweite Gruppe von Kameraparametern berechnet, über die ein nicht abgewichenes Vogelperspektivenvideo anhand der von der Eingabeeinheit (407) eingegebenen mehreren Kreuzungen und vorgespeicherten Informationen über Positionen und Stellungen der mehreren Kameras erzeugt werden kann.

9. Kamerakalibrierungsvorrichtung nach Anspruch 7 oder 8, die ferner umfasst:
eine Kartenerzeugungseinheit (411), die eine Karte zum Umsetzen der mehreren Bilder in das Vogelperspektivenvideo anhand der ersten Gruppe von Kameraparametern erzeugt.

10. Kamerakalibrierungsvorrichtung nach Anspruch 8, wobei
die Erkennungsbestimmungseinheit (405) anhand der berechneten Steigungswinkel, Scherwinkel und Höhen bestimmt, ob die mehreren erkannten Kreuzungen korrekt sind.

11. Kamerakalibrierungsvorrichtung nach mindestens einem der Ansprüche 7 bis 10, wobei
der Kalibrierungsindex mehrere Kreuzungen (201-208, 209, 210, 213, 214 oder 201-208, 211, 212, 215, 216) umfasst, die durch mindestens zwei erste parallele gerade Linien (L1, L2), zwei zweite parallele gerade Linien (L5, L6 oder L7, L8) mit von den beiden ersten parallelen geraden Linien (L1, L2) verschiedener Neigung und zwei dritten parallelen geraden Linien (L3, L4) mit von den beiden ersten parallelen geraden Linien (L1, L2) verschiedener Neigung gebildet werden.

12. Kamerakalibrierungsvorrichtung nach mindestens einem der Ansprüche 7 bis 10, wobei
der Kalibrierungsindex mehrere Kreuzungen (201-216) enthält, die durch zwei erste parallele gerade Linien (L1, L2), zwei zweite parallele gerade Linien (L5, L6) mit von den beiden ersten parallelen geraden Linien (L1, L2) verschiedener Neigung, zwei dritten parallelen geraden Linien (L3, L4) mit von den beiden ersten parallelen geraden Linien (L1, L2) verschiedener Neigung und zwei vierten parallelen geraden Linien (L7, L8) mit von den zweiten und den dritten parallelen geraden Linien (L3, L4, L5, L6) verschiedener Neigung gebildet werden.

## Revendications

1. Procédé d'étalonnage de caméra, mis en oeuvre sur ordinateur, pour étalonner une pluralité de caméras (1, 2, 3, 4) utilisant une pluralité d'images générées en prenant des images d'une zone périphérique d'un véhicule par la pluralité de caméras (1, 2, 3, 4), la zone périphérique d'un véhicule incluant un indice d'étalonnage préalablement apposé sur une surface routière sur laquelle le véhicule est positionné, la pluralité de caméras (1, 2, 3, 4) étant montées sur le véhicule,
ledit indice d'étalonnage incluant une pluralité d'intersections (201, 202, 205, 206 ou 209, 210, 213, 214) formées par au moins deux premières lignes droites parallèles (L1, L2) et deux secondes lignes droites parallèles (L5, L6 ou L7, L8) ayant une inclinaison différente par rapport aux deux premières lignes droites parallèles (L1, L2), ledit procédé d'étalonnage de caméra comprenant les étapes consistant à :
générer (403) une séquence vidéo en vue plongeante en convertissant le point d'observation de chacune de la pluralité d'images sur la base d'un premier jeu de paramètres de caméras qui est stocké à l'avance ;
reconnaître (404) la pluralité d'intersections depuis la séquence vidéo en vue plongeante générée ; et
calculer (408) un second jeu de paramètres de caméras, via lequel une séquence vidéo en vue plongeante dépourvue de déviation peut être générée, sur la base de la pluralité d'intersections reconnues et
d'informations sur les positions et des poses de ladite pluralité de caméras (1, 2, 3, 4).
**caractérisé en ce que**
l'étape de calcul (408) d'un second jeu de paramètres de caméra comprend les étapes consistant à :
générer (501) une pluralité de lignes droites à partir de la pluralité d'intersections reconnues ;
calculer (502, 504) des angles de tangage et des angles de lacet de la pluralité de caméras, de sorte que la pluralité de lignes droites générées dans les images générées par les caméras deviennent parallèles ;
calculer (505) les hauteurs de la pluralité de caméras de sorte qu'une distance entre chaque couple de la pluralité de lignes droites dans les images générées par les caméras devienne une distance prédéfinie ;
étalonner (601) les angles de roulis de la pluralité de caméras en fixant les pentes des lignes droites verticales prises par chaque caméra vers la même direction, et en changeant les angles de roulis de chaque caméra de la même quantité, de sorte qu'une erreur dans les parties frontières des images formant la séquence vidéo en vue plongeante est minimisée ;
calculer (602) des composantes de translation de sorte que l'erreur de déviation dans les lignes droites dans la frontière des images formant la séquence vidéo en vue plongeante est minimisée ; et
calculer (408) le second jeu de paramètres de caméras, via lequel une séquence vidéo en vue plongeante non déviée peut être générée, sur la base des angles de tangage, des angles de lacet, des hauteurs, des angles de roulis, et des composantes de translation calculées, qui sont toutes les informations sur les positions et les poses de la pluralité de caméras, et la pluralité d'intersections reconnues.

2. Procédé d'étalonnage de caméra selon la revendication 1, dans lequel l'étape consistant à calculer (408) un second jeu de paramètres de caméras comprend les étapes consistant à :
déterminer (405) si la pluralité d'intersections reconnues sont correctes ;
présenter (406) la séquence vidéo en vue plongeante sur un dispositif d'affichage (107) si l'on a déterminé que la pluralité d'intersections sont erronées en résultat de la détermination ; et
quand une pluralité d'intersections correctes sont entrées (407), calculer (408) un second jeu de paramètres de caméras, via lequel il est possible de générer une séquence vidéo en vue plongeante non déviée, sur la base de la pluralité d'intersections entrées et d'informations préalablement stockées sur des positions et des poses de la pluralité de caméras.

3. Procédé d'étalonnage de caméra selon la revendication 1 ou 2, dans lequel
la séquence vidéo en vue plongeante est générée en utilisant une carte générée sur la base du premier jeu de paramètres de caméras.

4. Procédé d'étalonnage de caméra selon l'une au moins des revendications 1 à 3, comprenant en outre l'étape consistant à :
déterminer (405) si la pluralité d'intersections reconnues depuis la séquence vidéo en vue plongeante générée sont correctes, sur la base des angles de tangage, des angles de lacet, et des hauteurs calculées.

5. Procédé d'étalonnage de caméra selon l'une au moins des revendications 1 à 4, dans lequel
ledit index d'étalonnage inclut une pluralité d'intersections (201-208, 209, 210, 213, 214 ou 201-208, 211, 212, 215, 216) formées par au moins deux premières lignes droites parallèles (L1, L2), par deux secondes lignes droites parallèles (L5, L6 ou L7, L8) ayant une inclinaison différente de celle des deux premières lignes droites parallèles (L1, L2), et par deux troisièmes lignes droites parallèles (L3, L4) ayant une inclinaison différente de celle des deux premières lignes droites parallèles (L1, L2).

6. Procédé d'étalonnage de caméra selon l'une au moins des revendications 1 à 4, dans lequel
ledit index d'étalonnage inclut une pluralité d'intersections (201-216) formées par deux premières lignes droites parallèles (L1, L2), par deux secondes lignes droites parallèles (L5, L6) ayant une inclinaison différente de celle des deux premières lignes droites parallèles (L1, L2), par deux troisièmes lignes droites parallèles (L3, L4) ayant une inclinaison différente de celle des deux premières lignes droites parallèles (L1, L2), et par deux quatrièmes lignes droites parallèles (L7, L8) ayant une inclinaison différente de celles des secondes et des troisièmes lignes droites parallèles (L3, L4, L5, L6).

7. Appareil d'étalonnage de caméra pour étalonner une pluralité de caméras (1, 2, 3, 4) en utilisant une pluralité d'images générées en prenant des images d'une zone périphérique d'un véhicule par la pluralité de caméras (1, 2, 3, 4), la zone périphérique du véhicule incluant un indice d'étalonnage préalablement apposé sur une surface de la route sur laquelle le véhicule est positionné, la pluralité de caméras (1, 2, 3, 4) étant montées sur le véhicule, ledit indice d'étalonnage incluant une pluralité d'intersections (201, 202, 205, 206 ou 209, 210, 213, 214) formées par au moins deux premières lignes droites parallèles (L1, L2) et par deux secondes lignes droites parallèles (L5, L6 ou L7, L8) ayant une inclinaison différente de celle des deux premières lignes droites parallèles (L1, L2), ledit appareil d'étalonnage de caméras comprenant :
une unité de génération de séquence vidéo en vue plongeante (402) qui génère une séquence vidéo en vue plongeante en convertissant le point d'observation de chacune de la pluralité d'images sur la base d'un premier groupe de paramètres de caméras qui est stocké à l'avance ;
une unité de reconnaissance de point caractéristique (404) qui reconnaît la pluralité d'intersections depuis la séquence vidéo en vue plongeante générée ; et
une unité d'étalonnage (408) qui calcule un second groupe de paramètres de caméras, via laquelle une séquence vidéo en vue plongeante non déviée peut être générée, sur la base de la pluralité d'intersections reconnues et
d'informations sur des positions et des poses de ladite pluralité de caméras (1, 2, 3, 4).
**caractérisé en ce que**
ladite unité d'étalonnage (408) comprend :
une unité de génération de lignes droites virtuelles (501) qui génère une pluralité de lignes droites à partir de la pluralité d'intersections reconnues ;
une unité de correction de tangage (502) qui calcule des angles de tangage de la pluralité de caméras, de sorte que la pluralité de lignes droites générées dans les images générées par les caméras deviennent parallèles ;
une unité de correction de lacet (504) qui calcule des angles de lacet de la pluralité de caméras de telle sorte que la pluralité de lignes droites générées dans les images générées par les caméras deviennent parallèles ;
une unité de correction de hauteur (505) qui calcule les hauteurs de la pluralité de caméras de telle façon qu'une distance entre chaque couple de la pluralité de lignes droites dans les images générées par les caméras devienne une distance prédéfinie ;
une unité de correction de roulis (601) qui étalonne des angles de roulis de la pluralité de caméras en fixant les pentes des lignes droites verticales prises par chaque caméra vers la même direction, et en changeant les angles de roulis de chaque caméra de la même quantité, de sorte qu'une erreur dans les parties frontières des images formant la séquence vidéo en vue plongeante est minimisée ; et
une unité de correction de translation (602) qui calcule des composantes de translation de telle façon que l'erreur de déviation dans les lignes droites dans la frontière des images formant la séquence vidéo en vue plongeante est minimisée, dans lequel
ladite unité d'étalonnage (408) calcule un second groupe de paramètres de caméras, via lesquels une séquence vidéo en vue plongeante non déviée peut être générée, sur la base des angles de tangage, des angles de lacet,
des hauteurs, des angles de roulis, et des composantes de translation calculé(e)s, qui sont toutes les informations sur les positions et les poses de la pluralité de caméras, et la pluralité d'intersections reconnues.

8. Appareil d'étalonnage de caméra selon la revendication 7, comprenant en ' outre :
une unité de détermination de reconnaissance (405) qui détermine si la pluralité d'intersections reconnues sont correctes ;
une unité d'affichage (406) qui affiche la séquence vidéo en vue plongeante sur un dispositif d'affichage (107) s'il est déterminé que la pluralité d'intersections sont erronées en résultat de la détermination ; et
une unité de saisie (407) via laquelle sont entrées une pluralité d'intersections correctes, dans lequel
ladite unité d'étalonnage (408) calcule un second groupe de paramètres de caméra, via lesquels une séquence vidéo en vue plongeante non déviée peut être générée, sur la base de la pluralité d'intersections entrées depuis ladite unité de saisie (407) et d'informations préalablement stockées sur des positions et des poses de la pluralité de caméras.

9. Appareil d'étalonnage de caméra selon la revendication 7 ou 8, comprenant en outre :
une unité de génération de carte (411) qui génère une carte pour convertir la pluralité d'images en donnant la séquence vidéo en vue plongeante basée sur le premier groupe de paramètres de caméras.

10. Appareil d'étalonnage de caméra selon la revendication 8, dans lequel ladite unité de détermination de reconnaissance (405) détermine si la pluralité d'intersections reconnues sont correctes en se basant sur les angles de tangage, sur les angles de lacet, et sur les hauteurs calculé(e)s.

11. Appareil d'étalonnage de caméra selon l'une au moins des revendications 7 à 10, dans lequel
ledit index d'étalonnage inclut une pluralité d'intersections (201-208, 209, 210, 213, 214 ou 201-208, 211, 212, 215, 216) formées par au moins deux premières lignes droites parallèles (L1, L2), par deux secondes lignes droites parallèles (L5, L6 ou L7, L8) ayant une inclinaison différente de celle des deux premières lignes droites parallèles (L1, L2), et par deux troisièmes lignes droites parallèles (L3, L4) ayant une inclinaison différente de celle des deux premières lignes droites parallèles (L1, L2).

12. Appareil d'étalonnage de caméra selon l'une au moins des revendications 7 à 10, dans lequel
ledit index d'étalonnage inclut une pluralité d'intersections (201-216) formées par deux premières lignes droites parallèles (L1, L2), par deux secondes lignes droites parallèles (L5, L6) ayant une inclinaison différente de celle des deux premières lignes droites parallèles (L1, L2), par deux troisièmes lignes droites parallèles (L3, L4) ayant une inclinaison différente de celle des deux premières lignes droites parallèles (L1, L2), et par deux quatrièmes lignes droites parallèles (L7, L8) ayant une inclinaison différente de celles des secondes et des troisièmes lignes droites parallèles (L3, L4, L5, L6).
